# EUROPEAN PATENT APPLICATION

(11) **EP 4 818 996 A1**
(43) Date of publication of application: **07.10.2026**
(21) Application number: 25167469.3
(22) Date of filing: 31.03.2025
(51) Int. Cl.: G06Q 10/0631, G06Q 50/40, G08G 1/00

(54) **SYSTEM AND METHOD FOR DISPATCH SCHEDULING OF MIXED FLEET COMPRISING ELECTRIC VEHICLES AND NON-ELECTRIC VEHICLES**

(71) Applicant: Siemens Aktiengesellschaft, 80333 München (DE)
(72) Inventor: KUMAR, Abhay, 560100 Bengaluru, Karnataka (IN); D, Akshaynitin, 620019 Tiruchirappalli, Tamil Nadu (IN); K, Sharanya, 673019 Calicut (IN); SRI, ANANTHI, 641103 Coimbatore (IN)
(74) Representative: Patentanwaltskanzlei WILHELM & BECK

(57) **Abstract**

A computer-implemented method (300) and a system (100) for dispatch scheduling of a mixed fleet (10) comprising of electric vehicles (EVs) (12A-N) and non-electric vehicles (non-EVs) (14AN) are disclosed. The method includes receiving, by one or more processing units (108), vehicle parameters (102) related to travel range, and at least one of vehicle loading capacity or vehicle dimensions; and route parameters (104) concerning route distance and at least one of required vehicle loading capacity or required vehicle dimensions for the routes. A first schedule is determined (306) for the EVs (12A-N) for selected routes using a predefined optimisation model and constraints, and remaining routes are identified. A second schedule is determined (310) for the non-EVs (14A-N) by comparing corresponding vehicle parameters (102) against route parameters (104) of the said remaining routes. The schedules are then displayed (312) on an electronic display device (112) communicably connected to the processing units (108).

## Description

The present disclosure generally relates to vehicle dispatch scheduling, and more particularly, relates to a system and a computer-implemented method for dispatch scheduling of a mixed fleet comprising one or more electric vehicles and one or more non-electric vehicles.

The transportation sector globally is undergoing a significant transformation towards the adoption of more sustainable electric vehicles (EVs). Consequently, many fleet operators are transitioning their fleets from non-electric vehicles (non-EVs), such as those powered by internal combustion engines, including diesel- and gasoline- powered vehicles, to EVs in a phased manner. This phased transition allows them to minimise disruptions to their existing route schedules, gain experience with EVs in terms of performance, maintenance, operational issues, and range anxiety, and manage their capital expenditure (capex) investment more effectively.

As the transportation sector continues to transition towards more sustainable vehicles, fleet operators are facing significant challenges in managing the dispatch planning of their mixed fleets, comprising both EVs and non-EVs. Dispatch planning involves the strategic allocation of vehicles to specific routes to optimize operational efficiency, reduce costs, and enhance customer satisfaction. For non-EVs, dispatch planning is typically managed using existing software tools that optimize vehicle-to-route mapping based on factors such as route distance, vehicle capacity, and driver availability.

However, the introduction of EVs into the fleet complicates dispatch planning due to the unique characteristics and requirements of these vehicles. EVs necessitate careful consideration of factors such as charging times, range limitations, and specific operational constraints. To address these challenges, fleet operators have had to invest in separate software tools specifically configured for EV dispatch planning. These tools account for the distinct technical requirements of EVs, to generate optimized dispatch plans that are specifically adapted to the unique operational characteristics of EVs.

The use of separate software tools for non-EV and EV dispatch planning presents several challenges. Notably, the requisite computational infrastructure to support multiple software tools may entail a substantial augmentation of energy consumption. This may in turn lead to heightened energy costs and a concomitant expansion of the depot / fleet management organization's carbon footprint. Such an increase in carbon footprint is undesirable, as it can contribute to climate change and negatively impact the environment.

Furthermore, the complexity of integrating data from multiple sources can result in data inconsistencies and errors, compromising the accuracy of dispatch plans. The process of transferring data between different software tools may lead to data entry errors, formatting inconsistencies, and mismatches in data fields, which can subsequently affect the reliability and accuracy of the dispatch plans. Moreover, the integration of data from multiple sources may also lead to issues related to data compatibility, formatting, and standardization. For instance, different software tools may use different data formats, protocols, or standards, which can make it challenging to integrate the data seamlessly. This can result in data being lost, corrupted, or misinterpreted, potentially affecting the accuracy and reliability of the dispatch plans.

The use of separate software tools for non-EV and EV dispatch planning also presents significant operational and maintenance challenges. Specifically, the need for multiple software solutions can lead to increased maintenance and support costs, as well as the requirement for specialized personnel to manage and operate these software systems. Furthermore, the expanded computational footprint required to support multiple software platforms for dispatch scheduling may necessitate additional expenditures for hardware maintenance, upgrades, replacement, and license management, thereby leading to elevated operational expenses and further exacerbating the complexity and cost of managing a mixed fleet of EVs and non-EVs.

The economic implications of managing separate dispatch planning tools for non-EVs and EVs can be substantial. The costs associated with purchasing and maintaining multiple software solutions can be prohibitively expensive for small and medium-sized fleet operators. The complexity of managing multiple systems can also lead to increased operational costs, as well as the potential for errors and inefficiencies that can impact customer satisfaction and loyalty.

In light of the above, there exists a need in the art to address, mitigate, or overcome at least in part the aforementioned challenges.

Accordingly, it is an object of the present disclosure to provide a computer-implemented method and a system for dispatch scheduling of a mixed fleet including one or more electric vehicles (EVs) and one or more non-electric vehicles (non-EVs). The method and the system of the present disclosure provide a unified and integrated approach to dispatch planning, thereby reducing the complexity and costs associated with managing separate dispatch planning tools for non-EVs and EVs.

According to one aspect, the computer-implemented method for dispatch scheduling of a mixed fleet having one or more electric vehicles (EVs) and one or more non-electric vehicles (non-EVs), is provided. The method includes receiving, by one or more processing units, vehicle parameters of each vehicle in the mixed fleet. The vehicle parameters relate at least to a range of travel and at least one of a vehicle loading capacity or one or more vehicle dimensions of the corresponding vehicle (EV or non-EV) in the mixed fleet. The method includes receiving, by the one or more processing units, route parameters for each of a plurality of routes. The route parameters for each route include data pertaining to a route distance, and at least one of a required vehicle loading capacity or required one or more vehicle dimensions for the corresponding route. The method includes determining, by the one or more processing units, a first schedule for dispatch of the one or more EVs to first one or more of the plurality of routes by computing a solution for a predefined optimisation model having constraints as the vehicle parameters corresponding to the one or more EVs and the said route parameters. The method further includes identifying remaining second one or more of the plurality of routes. The method includes determining, by the one or more processing units, a second schedule for dispatch of the one or more non-EVs to the second one or more of the plurality of routes, based on comparison of the vehicle parameters pertaining to the one or more non-EVs with the route parameters corresponding to the second one or more of the plurality of routes. The method includes causing to display, by the one or more processing units, the first schedule and the second schedule using an electronic display device communicably connected to the one or more processing units.

Aspects, exemplary embodiments and implementations of the present disclosure will now be described in further detail. It should be understood that the following descriptions are provided for explanatory purposes only and are not intended to limit the scope of the disclosure.

One aspect of the present disclosure pertains to a computer-implemented method for dispatch scheduling of a mixed fleet having one or more electric vehicles (EVs) and one or more non-electric vehicles (non-EVs). The method includes receiving, by one or more processing units, vehicle parameters of each vehicle in the mixed fleet. The vehicle parameters relate at least to a range of travel, and at least one of a vehicle loading capacity or one or more vehicle dimensions of the corresponding vehicle (EV or non-EV) in the mixed fleet.

In an embodiment, data pertaining to the vehicle parameters of each vehicle in the mixed fleet are collected through one or more data acquisition devices that collect and transmit the relevant information. The one or more data acquisition devices may include, but are not limited to, sensors, position tracking devices, and other types of data collection systems that are installed on the vehicles.

The data pertaining to the vehicle parameters of each vehicle in the mixed fleet are received by the one or more processing units through a network that communicably connects the data acquisition devices to the one or more processing units. In an embodiment, the network is a wireless network, which provides flexibility and mobility for the vehicles in the mixed fleet. For example, the wireless network may be based on a cellular network, Wi-Fi, Bluetooth, or other wireless communication protocols commonly used in the mobility industry.

In an embodiment, the one or more data acquisition devices may transmit the collected data to the one or more processing units in real-time or at regular intervals, using the network. The transmitted data may be in the form of raw data, processed data, or summary reports, depending on the specific requirements of the dispatch scheduling system. The one or more processing units may receive the transmitted data and store it in a database or other data storage system for further processing and analysis.

Additionally, the one or more data acquisition devices may also include onboard diagnostics systems and telematics devices, which can provide further information on the performance, maintenance needs, and other operational parameters associated with the vehicles.

As aforementioned, the vehicle parameters relate at least to a range of travel, and at least one of a vehicle loading capacity or one or more vehicle dimensions of the corresponding vehicle (EV or non-EV). Across embodiments, the range of travel and the vehicle loading capacity may be explicitly available data or calculated data or may be inferred from other available data. For instance, the range of travel for non-EVs, such as internal combustion engine vehicles, may be expressed in terms of mileage or directly as a range of travel, whereas for EVs, the range of travel may be known or calculated from one or more of a battery State of Charge (SoC), power, voltage, current, and/or other electrical parameters. For instance, vehicle loading capacity may be represented as a numerical value, such as tonnage, or as a categorical value, such as small, medium, or large, which is based on predefined threshold values and/or ranges of values. Across various embodiments, the one or more vehicle dimensions may be directly provided or implied through related metrics, such as volume or surface area and height. These vehicle dimensions may be indicative of the cargo carrying capacity, encompassing measurements directly relevant to logistical planning and vehicle assignment. Furthermore, the one or more vehicle dimensions may include specifics such as vehicle length type, which can further inform operational constraints and compatibility considerations within the fleet scheduling process. The vehicle length type may be categorical, such as small, medium, or long, with prescribed ranges or thresholds for these categories. These categories can help in determining the compatibility of the vehicle with the spatial constraints of the designated routes.

In an embodiment, the vehicle parameters of each EV in the mixed fleet includes at least one of: maximum allowable charging power rate of the EV, a State of Charge (SoC) of EV, or a balancing duration associated with cells in the EV. The maximum allowable charging power rate refers to the maximum rate at which a vehicle's battery pack can be charged, typically measured in watt (W) or kilowatt (kW). The State of Charge (SoC) refers to the current level of charge in the battery pack, typically expressed as a percentage of the total capacity. The balancing duration associated with cells of the battery pack refers to the time required to balance the charge levels among the individual cells in the battery pack, ensuring optimal performance and longevity. These parameters may provide necessary information for optimising dispatch planning of the one or more EVs in the mixed fleet.

In an embodiment, the vehicle parameters of each EV and non-EV in the mixed fleet may further include one or more periods of unavailability of the corresponding vehicle. These periods of unavailability refer to times when the vehicle is not available for dispatch due to various reasons such as maintenance, repair, cleaning, or other scheduled or unscheduled downtime. For example, a vehicle may be unavailable due to routine maintenance such as oil changes, tire rotations, or battery checks. Alternatively, a vehicle may be unavailable due to repairs, such as fixing a mechanical issue or replacing a faulty component. Additionally, a vehicle may be unavailable due to cleaning, such as after a spill or contamination.

The periods of unavailability may be scheduled in advance, such as for routine maintenance, or may be unexpected, such as in the case of a breakdown. The method of the present disclosure takes into account these periods of unavailability when generating dispatch plans, ensuring that vehicles are not assigned to routes during times when they are not available. In an embodiment, the periods of unavailability may be represented as time windows or intervals, such as a start and end time, and/or as a duration.

The computer-implemented method of the present disclosure includes receiving, by the one or more processing units, route parameters for each of a plurality of routes. The route parameters include data pertaining to a route distance and a required vehicle loading capacity for the corresponding route.

In an embodiment, the route parameters may also include other data, such as route type, road conditions, and vehicle restrictions. The type of route, such as highway, urban, or rural, can affect the route distance and vehicle loading capacity. The condition of the roads, such as traffic, construction, or weather, may also impact the route distance and vehicle loading capacity. Additionally, vehicle restrictions, such as height, weight, or length limitations, may also impact the types of vehicles that can be assigned to a particular route, further influencing the dispatch scheduling process.

In an embodiment, the route parameters for each of the plurality of routes further includes at least two of: a predefined start time for the route, a predetermined end time for the route, or a predefined duration of the route. These time parameters may be indicative of time windows for pickup and delivery of goods. The inclusion of at least two of these parameters allows for the calculation of the third parameter, thereby providing a complete time window for the route.

In an embodiment, the route parameters for one or more of the plurality of routes further comprises a preferential vehicle-type allocation parameter that corresponds to a preferential assignment of one of EVs or non-EVs. The route preference may be based on various factors, such as the type of cargo being transported, the route terrain, or the customer's specific requirements. For instance, a route that requires transportation of heavy cargo may prefer the assignment of a non-EV, while a route that requires transportation of lighter cargo may prefer the assignment of an EV. As another instance, a route that requires transportation of cargo through environmentally sensitive areas may prefer the assignment of EVs to minimise vehicular emissions.

In an embodiment, the route preferences for vehicle-type allocation may be explicitly defined by the customer or the fleet operator, and may be based on environmental considerations, cost, and regulatory requirements. For instance, routes that pass through areas with strict emission standards may prefer the assignment of EVs to minimise emissions and comply with regulatory requirements. Similarly, routes that require transportation of light cargo over short distances may prefer the assignment of EVs to minimise fuel costs and reduce the fleet's operating expenses. On the other hand, routes that require transportation of heavy cargo over long distances may prefer the assignment of non-EVs, such as diesel-powered trucks, due to their higher towing capacity and longer driving range. Additionally, routes that pass through areas with limited charging infrastructure may also prefer the assignment of non-EVs to minimise the risk of range anxiety and ensure timely delivery of cargo.

In an embodiment, in absence of an explicit route preference for vehicle-type allocation within the route parameters corresponding to any of the plurality of routes, the one or more processing units are configured to default to prioritise assignment of EVs to the corresponding routes. This default prioritisation may be based on environmental considerations and/or regulatory requirements, whereby EVs are prioritised to minimise local emissions, while also minimising fuel costs and ensuring compliance with regulatory requirements.

The computer-implemented method includes determining, by the one or more processing units, a first schedule for dispatch of the one or more EVs to first one or more of the plurality of routes by computing a solution for a predefined optimisation model having constraints as the vehicle parameters corresponding to the one or more EVs and the said route parameters. In an embodiment, the predefined optimisation model for determining the first schedule may implement one of a Mixed Integer Linear Programming (MILP) algorithm or a heuristic algorithm.

Advantageously, the predefined optimisation model determines an optimal first schedule for the dispatch of the one or more EVs to the routes, while minimising their local environmental impact. This approach promotes sustainability by reducing local greenhouse gas emissions, air pollution, and other negative environmental effects associated with traditional fossil fuel-based transportation.

In an embodiment where the vehicle parameters of each EV in the mixed fleet includes one or more periods of unavailability, determining the first schedule for the dispatch of the one or more EVs include excluding for each EV, by the predefined optimization model, one or more time slots that coincide with the one or more periods of unavailability of the corresponding EV. Advantageously, the predefined optimization model can generate a more realistic and efficient dispatch schedule that takes into account the actual availability of the one or more EVs, thereby reducing the likelihood of dispatch errors and improving overall fleet utilization.

The computer-implemented method of the present disclosure includes identifying remaining second one or more of the plurality of routes that are pending dispatch assignment. The identification of the remaining routes is a crucial step in the dispatch planning process, as it allows for a focus on the routes that still require assignment and facilitates the allocation of the available one or more non-EVs to these routes.

The computer-implemented method includes determining, by the one or more processing units, a second schedule for dispatch of the one or more non-EVs to the second one or more of the plurality of routes, based on comparison of the vehicle parameters pertaining to the one or more non-EVs with the route parameters corresponding to the second one or more of the plurality of routes.

In an embodiment, the vehicle parameters of each non-EV in the mixed fleet may include one or more periods of unavailability of the corresponding non-EV. In the embodiment, determining the second schedule for the dispatch of the one or more non-EVs involves excluding, for each non-EV, one or more time slots that coincide with the one or more periods of unavailability of the corresponding non-EV. Advantageously, it is ensured that one or more route assignments for the one or more non-EVs are made within respective accessible operational windows.

As indicated earlier, in an embodiment, the route parameters for one or more of the plurality of routes further may include the preferential vehicle-type allocation parameter that corresponds to a preferential assignment of one of EVs or non-EVs. In the embodiment, the step of determining the first schedule for the dispatch of the one or more EVs and the step of determining the second schedule for the dispatch of the one or more non-EVs are executed in accordance with the route parameters, such that the preferential vehicle-type is prioritised for assignment to the respective routes. Advantageously, by executing the steps of determining the first and second schedules in accordance with the route parameters, the preferred vehicle-type can be prioritized for assignment to the respective routes, thereby increasing the efficiency and effectiveness of the fleet operations, reducing the likelihood of vehicle misallocation, and improving overall customer satisfaction.

In an embodiment, determining the first schedule for the dispatch of the one or more EVs and the second schedule for the dispatch of the one or more non-EVs involves generating a feasibility matrix for evaluating a compatibility of each EV with the first one or more of the plurality of routes and a compatibility of each non-EV with the second one or more of the plurality of routes, based on the comparison of the vehicle parameters pertaining to the one or more EVs and the one or more non-EVs with the corresponding route parameters. The feasibility matrix may be a data structure that represents the compatibility of each EV with each of the first one or more of the plurality of routes and of each non-EV with each of the second one or more of the plurality of routes, based on the said comparison.

In one preferred embodiment, the feasibility matrix may be a binary matrix, where each element in the matrix can have a value of either "true" or "false", indicating whether a particular vehicle is compatible with a particular route or not. Following the generation of the feasibility matrix, each EV in the mixed fleet can be mapped to the corresponding compatible first one or more of the plurality of routes, and each non-EV in the mixed fleet can be mapped to the corresponding compatible second one or more of the plurality of routes, based on the feasibility matrix.

In an embodiment, the feasibility matrix may have a plurality of entries or elements, each associated with a combination of a vehicle and a route. For example, the feasibility matrix can be represented as a table, where the rows represent the vehicles and the columns represent the routes. Each cell in the table contains a value (entry) indicating whether the corresponding vehicle is compatible with the corresponding route. The values in the feasibility matrix can be used to map each vehicle to the corresponding compatible routes, and to determine the schedules for the dispatch of the one or more EVs and the one or more non-EVs. Each entry in the feasibility matrix may represent either a truth value indicating feasibility of the corresponding vehicle to serve the corresponding route, or a non-truth value indicating infeasibility of the corresponding vehicle to serve the corresponding route. For instance, the truth value can be represented by the numerical value "1" and the non-truth value can be represented by the numerical value "0".

Advantageously, the use of a feasibility matrix with binary values (e.g. 0 and 1) enables a clear and concise representation of the compatibility between the vehicles and the routes, facilitating efficient mapping and scheduling of the vehicles in the mixed fleet. This representation also allows for easy identification of feasible and infeasible combinations, reducing the complexity of the dispatch planning and enabling more accurate and effective allocation of the one or more EVs and the one or more non-EVs to their respective routes. Furthermore, the use of the feasibility matrix enables the consideration of multiple factors and constraints in the dispatch planning, leading to more informed and optimized decision-making.

In an embodiment, when the one or more of the plurality of routes constitutes a plurality of routes (i.e., the first one or more of the plurality of routes include a first plurality of routes and the second one or more of the plurality of routes include a second plurality of routes), the computer-implemented method further includes determining, for each EV and each non-EV, whether there exists one or more overlaps between the time slots of the corresponding routes initially assigned, including any predetermined buffer time between successive routes associated with the corresponding vehicle. When there exists one or more overlaps, the computer-implemented method includes updating the feasibility matrix based on the determined overlap. Updating the feasibility matrix may include assigning a non-truth value (0) to each of one or more subsequent truth-mapped entries after the first feasible vehicle and route combination that is truth-mapped (1).

For example, consider a scenario where a non-EV may be initially assigned to two routes, Route A and Route B based on an initial feasibility matrix. Route A may start at 8:00 AM and may end at 10:00 AM, while Route B may start at 9:30 AM and may end at 11:30 AM. The predetermined buffer time between the two routes for the non-EV may be 30 minutes. In this case, the method may determine that there exists an overlap between the time slots of the two routes. Additionally, in the example, no buffer time of 30 minutes is accounted for after the end of Route A (i.e., the earlier starting route) to initiate route B.

When such an overlap is detected, the method may include updating the feasibility matrix by assigning a non-truth value to each of one or more subsequent truth-mapped entries after the first feasible non-EV and route combination that may be truth-mapped. In other words, the method may set the feasibility of the non-EV for the subsequent routes to "0" or "non-truth" or "false", indicating that the non-EV may not be available for those routes due to the overlap. For instance, if the feasibility matrix initially may show that the non-EV is feasible for both Route A and Route B (i.e., the entries for both routes may be set to "1" or "true"), the method updates the matrix by setting the entry for Route B to "0" or "non-truth" or "false", indicating that the non-EV may not be available for Route B due to the overlap with Route A. This ensures that the non-EV is not assigned to multiple routes with overlapping time slots which could result in scheduling conflicts.

In an embodiment, the computer-implemented method further includes determining refuelling schedules for the one or more non-EVs by assigning a predetermined buffer time between successive trips for each non-EV for facilitating refuelling of the one or more non-EVs, and assigning each of the one or more non-EVs to the second one or more of the plurality of routes based on the corresponding refuelling schedules.

For example, consider a non-EV bus that has a range of 200 km on a single tank of fuel. The method may assign a buffer time of 15 minutes between successive trips to facilitate refuelling. If the non-EV bus needs to cover a total distance of 220 km, and Route A is 200 km and Route B is 20 km following Route A (along the same line), the buffer time of 15 minutes is accounted for.

The method may involve assigning this non-EV bus to Route A and then to Route B, with a 15-minute refuelling break in between, to ensure that the non-EV bus has sufficient fuel to complete Route B.

In an embodiment, the computer-implemented method further includes determining charging schedules for the one or more EVs by assigning a predetermined buffer time between successive trips for each EV for facilitating charging thereof, and assigning each of the one or more EVs to the first one or more of the plurality of routes based on the corresponding charging schedules.

In an embodiment, the second schedule for the dispatch of the one or more non-EVs may be determined based on a maximization of vehicle range utilization of each non-EV with respect to the second one or more of the plurality of routes. For example, the method may prioritize the assignment of non-EVs to routes that are within their range, to minimize the need for refuelling and reduce the risk of range anxiety. The method may also consider the fuel efficiency of each non-EV and the terrain and traffic conditions of each route, to optimize the vehicle range utilization of each non-EV.

For example, consider two non-EV buses, each with a range of 250 km on a single tank of fuel. The method analyses the route parameters and identifies three routes that need to be assigned: Route A, spanning 120 km, Route B, spanning 80 km, and Route C, spanning 50 km. In the example, all three routes share the same starting location, which may be a depot. To optimize vehicle range utilization, the method assigns Route A and Route B to the first non-EV bus, as the combined distance of these two routes (200 km) falls within the range of travel of the first non-EV bus. Meanwhile, the method assigns Route C to the second non-EV bus, ensuring that both buses are utilized efficiently while minimising the need for refuelling.

Likewise, the first schedule for the dispatch of the one or more EVs may also be determined based on a maximization of vehicle range utilization of each EV with respect to the second one or more of the plurality of routes, to ensure that the one or more EVs are utilised efficiently while minimising the need for multiple charging cycles to serve the corresponding assigned routes.

The computer-implemented method of the present disclosure includes causing to display, by the one or more processing units, the first schedule and the second schedule using an electronic display device communicably connected to the one or more processing units. This enables users, such as but not necessarily limited to fleet / depot managers or operators, to visually comprehend and effectively manage the dispatch of both electric and non-electric vehicles within the fleet. The display may be configured to provide fleet operators with an intuitive and real-time visual representation of the scheduling status. This interactivity can support rapid adjustments and optimizations based on current fleet dynamics and requirements.

According to another aspect of the present disclosure, a system for dispatch scheduling of a mixed fleet comprising one or more electric vehicles (EVs) and one or more non-electric vehicles (non-EVs) is provided. The system has one or more processing units, an electronic display device communicatively connected to the one or more processing units, and a memory communicatively coupled to the one or more processing units. The memory comprises one or more modules stored in the form of machine-readable instructions executable by the one or more processing units. The one or more modules are configured to perform the aforementioned method steps.

According to yet another aspect of the present disclosure, a computer-program product is provided, which includes computer-readable instructions stored therein. When executed by one or more processing units, these instructions cause the one or more processing units to perform a method for dispatching a mixed fleet of electric vehicles (EVs) and non-electric vehicles (non-EVs) to a plurality of routes, according to any one of the aspects and embodiments described herein.

According to yet another aspect of the present disclosure, a computer-readable medium is provided. The computer-readable medium has program code sections of a computer program saved therein. The program code sections are loadable into and/or executable in a system to make the system execute the aforementioned method steps when the program code sections are executed in the system.

In an embodiment, the computer-readable medium may be a non-transitory storage medium, such as a hard disk drive, a solid-state drive, a flash drive, a compact disc (CD), a digital versatile disc (DVD), and the like. Across some embodiments, the computer-readable medium may be a volatile or non-volatile memory. In an embodiment, the program code sections may be stored on the computer-readable medium in a compressed or uncompressed format and may be encoded using various algorithms or protocols to ensure secure and reliable transmission and storage.

Advantageously, the computer-implemented method and system of the present disclosure provide a unified solution for dispatch scheduling of a mixed fleet comprising both electric vehicles (EVs) and non-electric vehicles (non-EVs), thereby overcoming the limitations and challenges associated with using separate software tools for EV and non-EV dispatch planning.

One of the significant advantages of the method and system of the present disclosure is the elimination of the need for disparate and multiple software applications for EV and non-EV dispatch planning, which can lead to increased energy consumption, heightened energy costs, and a larger carbon footprint. By providing a single, integrated solution for dispatch scheduling of both EVs and non-EVs, the method of the present disclosure reduces the computational infrastructure required to support multiple software tools, resulting in lower energy consumption and costs.

Furthermore, the method and system of the present disclosure overcome the complexity of integrating data from multiple sources, which can result in data inconsistencies and errors, compromising the accuracy of dispatch plans. By using a single, unified solution, the computer-implemented method and system of the present disclosure ensures that all data is integrated seamlessly, reducing the risk of data entry errors, formatting inconsistencies, and mismatches in data fields.

In addition, the method and system of the present disclosure reduce the operational and maintenance challenges associated with using separate software tools for EV and non-EV dispatch scheduling. The system of the present disclosure eliminates the need for specialized personnel to manage and operate disparate and multiple software systems for EV and non-EV dispatch scheduling, thereby reducing maintenance and support costs. The method and system of the present disclosure also provide significant economic benefits by reducing the costs associated with purchasing and maintaining multiple software solutions. This is particularly beneficial for small and medium-sized fleet operators who may find it prohibitively expensive to invest in separate software tools for EV and non-EV dispatch planning.

Moreover, the computer-implemented method and system of the present disclosure prioritizes the assignment of electric vehicles with zero tailpipe emissions, to routes where they can operate most efficiently and effectively. By prioritising and optimising the assignment of electric vehicles to routes based on their unique characteristics and requirements, such as range limitations and charging times, the method minimises the carbon footprint of the fleet and reduces local emissions on the road.

Furthermore, the focus of the method and system of the present disclosure on assigning electric vehicles to routes where they can operate most efficiently and effectively also leads to more effective management of range anxiety, as electric vehicles are assigned to routes that are within their range capabilities, minimising the risk of range anxiety and ensuring that electric vehicles can complete their assigned routes in a timely manner. Once the electric vehicles have been assigned to routes, the method then optimises the assignment of non-electric vehicles to the remaining routes. This approach ensures that non-electric vehicles are assigned to routes where they can operate most efficiently and effectively, reducing the overall emissions of the fleet and minimising the strain on energy infrastructure.

In addition, the optimization approach of the method of the present disclosure enables computational efficiency by pruning the solution space, resulting in reduced computational overhead and improved scalability. The method also provides a technical advantage by reducing the complexity of the optimization problem, as it breaks down the optimization problem into smaller sub-problems by first optimising the assignment of electric vehicles to routes and then optimising the assignment of non-electric vehicles to the remaining routes. This decomposition approach facilitates a more targeted and efficient solution process, reducing the computational complexity and allowing for effective management of computational resources.

Features which are described herein in the context of separable aspects and embodiments of the disclosure may be used together and/or be interchangeable. Similarly, features described in the context of a single embodiment may also be provided separately or in any suitable subcombination.

The above-mentioned aspects, features, embodiments, and advantages will become more apparent and understandable with the following description of embodiments of the disclosure in conjunction with the corresponding drawings. The illustrated embodiments are intended to illustrate but not limit the disclosure.

The present disclosure is further described hereinafter with reference to illustrated embodiments shown in the accompanying drawings, in which:
- FIG 1: is a block diagram of a system for dispatch scheduling of a mixed fleet comprising one or more electric vehicles (EVs) and one or more non-electric vehicles (non-EVs), in accordance with an exemplary embodiment of the present disclosure;
- FIG 2: is a block diagram of an exemplary computational architecture for dispatch scheduling of the mixed fleet, in accordance with an exemplary embodiment of the present disclosure;
- FIG 3: is a flow diagram illustrating a method for dispatch scheduling of the mixed fleet comprising the one or more electric vehicles (EVs) and the one or more non-electric vehicles (non-EVs), in accordance with an exemplary embodiment of the present disclosure; and
- FIG 4: is a representation of an exemplary vehicle dispatch schedule for a mixed fleet, illustrating vehicle to route mapping and corresponding dispatch schedules for eight EVs and ten non-EVs serving twenty-five routes, in accordance with an exemplary embodiment of the present disclosure .

Like reference signs have been used to indicate corresponding or similar elements throughout the drawings. It should be understood that like reference signs may be used to refer to the same or similar elements in different embodiments illustrated in the drawings.

Hereinafter, embodiments for carrying out the present disclosure are described in detail. The various embodiments are described with reference to the accompanying drawings, wherein like reference signs are used to refer to like elements throughout. In the following description, for the purpose of explanation, numerous specific details are set forth in order to provide a thorough understanding of one or more embodiments. It may be evident that such embodiments may be practiced without these specific details.

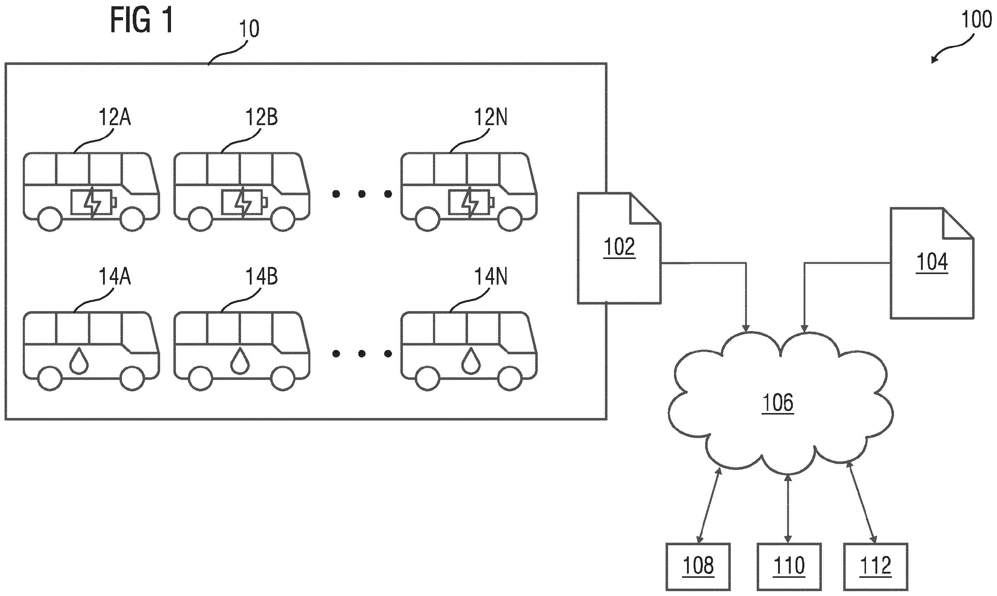

FIG 1 is a block diagram of a system 100 for dispatch scheduling of a mixed fleet 10 comprising one or more electric vehicles (EVs) 12A-N and one or more non-electric vehicles (non-EVs) 14AN, according to an embodiment of the present disclosure. The one or more EVs 12A-N may configured to be powered, either entirely or partially, by electricity stored in on-board batteries, typically recharged through external power sources. The one or more non-EVs 14A-N, on the other hand, may operate using combustion engines such as internal combustion (IC) engines powered by traditional energy sources. These sources of energy may include but not be limited to gasoline, diesel, or biofuels. In some other implementations, the one or more non-EVs 14A-N may be powered by alternate energy sources such as hydrogen fuel cells, compressed natural gas (CNG), or liquefied petroleum gas (LPG). The EVs 12A-N and the non-EVs 14A-N may operate from a depot, serving as the primary base for dispatch, management, and logistical coordination of the mixed fleet 10. The system 100 includes one or more processing units 108, a memory 110, and an electronic display device 112.

In the mixed fleet 10, each of the one or more EVs 12A-N and the one or more non-EVs 14A-N has associated vehicle parameters 102. Vehicle parameters 102 are specific characteristics or capabilities of a vehicle that influence its operational utility within the fleet 10, such as performance, capacity, and efficiency metrics. The vehicle parameters 102 relate at least to the range of travel (which determines how far the vehicle can travel on a single charge or tank of fuel), and at least one of a vehicle loading capacity (which defines the maximum load the vehicle can carry tailored specifically to the needs and operational roles of each vehicle (EV or non-EV) in the mixed fleet 10) or one or more vehicle dimensions (for example, a vehicle length type).

In an embodiment, data pertaining to the vehicle parameters 102 for each vehicle 12A-N, 14A-N in the mixed fleet 10 are collected through one or more data acquisition devices (not illustrated) that collect and transmit the relevant information. The one or more data acquisition devices may include, but are not limited to, sensors, position tracking devices, and other types of data collection systems that are installed on the vehicles 12A-N, 14A-N.

The system 100 includes one or more processing units 108 configured to receive the said vehicle parameters 102 pertaining to the one or more EVs 12A-N and the one or more non-EVs 14A-N through a network 106, that communicably connects the data acquisition devices to the one or more processing units. As used herein, the term "network" refers to a connection framework that enables information exchange between multiple nodes, such as multiple terminals and servers. Examples of such networks include, but are not limited to, wired and wireless data communication networks, telephone networks, wired and wireless television communication networks, Local Area Networks (LANs), Wide Area Networks (WANs), and the Internet (e.g., World Wide Web). Examples of wireless data communication networks encompass technologies such as 3G, 4G, 5G, 3GPP (3rd Generation Partnership Project), 5GPP (5th Generation Partnership Project), LTE (Long Term Evolution), WiMAX (World Interoperability for Microwave Access), Wi-Fi, Wireless LAN (Local Area Network), WAN (Wide Area Network), PAN (Personal Area Network), the Internet, RF (Radio Frequency), Bluetooth, NFC (Near-Field Communication), satellite broadcasting networks, analogue broadcasting networks, and DMB (Digital Multimedia Broadcasting) networks, among others.

In a preferable embodiment, the network 106 is a wireless network, which provides flexibility and mobility for the vehicles in the mixed fleet. For example, the wireless network may be based on a cellular network, Wi-Fi, Bluetooth, or other wireless communication protocols commonly used in the mobility industry. In another embodiment, the network 106 may be a wired network, such as but not limited to an Ethernet-based network.

In an embodiment, the one or more data acquisition devices may transmit the collected data to the one or more processing units 108 in real-time or at regular intervals, using the network 106. The transmitted data may be in the form of raw data, processed data, or summary reports, depending on the specific requirements of the dispatch scheduling system 100. The one or more processing units 108 may receive the transmitted data and store it in a database or other data storage system for further processing and analysis.

Additionally, in an embodiment, the one or more data acquisition devices may also include onboard diagnostics systems and telematics devices, which can provide further information on performance, maintenance needs, and other operational parameters associated with the one or more EVs 12A-N and the one or more non-EVs 14A-N.

As aforementioned, the vehicle parameters 102 relate at least to a range of travel and at least one of a vehicle loading capacity or one or more vehicle dimensions of the corresponding vehicle (EV or non-EV). Across embodiments, the range of travel and the vehicle loading capacity may be explicitly available data or calculated data or may be inferred from other available data. For instance, the range of travel for non-EVs 14A-N, such as internal combustion engine vehicles, may be expressed in terms of mileage or directly as a range of travel, whereas for EVs 12A-N, the range of travel may be known or calculated from one or more of a battery State of Charge (SoC), power, voltage, current, and/or other electrical parameters. For instance, vehicle loading capacity may be represented as a numerical value, such as tonnage, or as a categorical value, such as small, medium, or large, which is based on predefined threshold values and/or ranges of values. Alternatively, the vehicle loading capacity may be indirectly represented by a parameter such as vehicle length type, which can be indicative of the vehicle's load capacity. Across embodiments, the one or more vehicle dimensions may be directly provided or implied through related metrics, such as volume or surface area and height. These vehicle dimensions are indicative of the cargo carrying capacity, encompassing measurements directly relevant to logistical planning and vehicle assignment. Furthermore, the one or more vehicle dimensions may include specifics such as vehicle length type, which can further inform operational constraints and compatibility considerations within the fleet scheduling process. The vehicle length type may be categorical, such as small, medium, or long, with prescribed ranges or thresholds for these categories. These categories can help in determining the compatibility of the vehicle with the spatial constraints of the designated routes.

In an embodiment, in addition to the range of travel as the route parameter, in case of a fleet of passenger vehicles (EVs and/or non-EVs) such as but not limited to passenger cars and buses, another route parameter could be a vehicle length type (relating to the one or more vehicle dimensions). This dimension can be indicative of factors like passenger seating capacity, which may be a crucial requirement for certain routes or schedules. Advantageously, incorporating the vehicle length type as a route parameter, the dispatch scheduling can ensure compatibility between the assigned vehicles and the spatial constraints of the designated routes.

In an embodiment, in addition to the range of travel as the route parameter, in case of commercial vehicles (EVs and/or non-EVs) such as but not limited to cargo carriers, another route parameter could be vehicle loading capacity. This metric may represent the maximum weight or volume that the vehicle can safely transport, which could be essential for routes involving freight or goods delivery. Considering the vehicle loading capacity as a route parameter allows the system to match the appropriate commercial vehicles to routes based on the required payload, optimizing the utilization of the fleet's cargo carrying capabilities.

In an embodiment, the vehicle parameters of each EV 12A-N in the mixed fleet 10 includes at least one of: maximum allowable charging power rate of the EV, a State of Charge (SoC) of EV, or a balancing duration associated with cells in the EV. The maximum allowable charging power rate refers to the maximum rate at which a vehicle battery pack can be charged, typically measured in watt (W) or kilowatt (kW). The State of Charge (SoC) refers to the current level of charge in the battery pack, typically expressed as a percentage of the total capacity. The balancing duration associated with cells of the battery pack refers to the time required to balance the charge levels among the individual cells in the battery pack, ensuring optimal performance and longevity. These parameters may provide necessary information for optimising dispatch planning of the one or more EVs 12A-N in the mixed fleet 10.

In an embodiment, the vehicle parameters of each EV 12A-N and each non-EV 14A-N in the mixed fleet 10 may further include one or more periods of unavailability of the corresponding vehicle. These periods of unavailability refer to times when the vehicle is not available for dispatch due to various reasons such as maintenance, repair, cleaning, or other scheduled or unscheduled downtime. For example, a vehicle may be unavailable due to routine maintenance such as oil changes, tire rotations, or battery checks. Alternatively, a vehicle may be unavailable due to repairs, such as fixing a mechanical issue or replacing a faulty component. Additionally, a vehicle may be unavailable due to cleaning, such as after a spill or contamination.

The periods of unavailability may be scheduled in advance, such as for routine maintenance, or may be unexpected, such as in the case of a breakdown. The system 100 of the present disclosure takes into account these periods of unavailability when generating dispatch plans, ensuring that vehicles 12A-N, 14A-N are not assigned to routes during times when they are not available. In an embodiment, the periods of unavailability may be represented as time windows or intervals, such as a start and end time, and/or as a duration. This information may be used to adjust the dispatch plans accordingly, such as by assigning alternative vehicles and/or rescheduling routes. Advantageously, by considering periods of unavailability, the system 100 of the present disclosure can optimise dispatch plans to minimise disruption and ensure that the vehicles 12A-N, 14A-N are utilised efficiently, thereby improving overall fleet performance.

The one or more processing units 108 are further configured to receive route parameters 104 for each of a plurality of routes. The route parameters 104 include data pertaining to a route distance, and at least one of a required vehicle loading capacity or required one or more vehicle dimensions for the corresponding route.

In an embodiment, the route parameters 104 may be collected or known through various means, such as geographical information systems (GIS) data, route surveys, historical data, customer inputs, and regulatory requirements. For instance, route distances and other geographical data may be obtained from GIS databases or mapping services. Physical surveys of the routes may be conducted to gather data on route distances, road conditions, and other relevant factors. Historical data on route distances and vehicle loading capacities may be collected from previous dispatch operations. Customers may provide information on their specific route requirements, such as route distances and vehicle loading capacities and/or vehicle dimension parameters. Regulatory requirements, such as weight limits and size restrictions, may be obtained from government agencies or other authoritative sources.

In an embodiment, the route parameters 104 may also include other data, such as route type, road conditions, and vehicle restrictions. The type of route, such as highway, urban, or rural, can affect the route distance and vehicle loading capacity. The condition of the roads, such as traffic, construction, or weather, may also impact the route distance and vehicle loading capacity. Additionally, vehicle restrictions, such as height, weight, or length limitations, may also impact the types of vehicles that can be assigned to a particular route, further influencing the dispatch scheduling process.

In an embodiment, the route parameters for each of the plurality of routes includes geographic coordinates of the routes. Advantageously, including geographic coordinates of the routes in the route parameters enables more accurate and efficient route planning, as it allows for the consideration of spatial relationships between routes and the optimization of routes based on geographic location. This can lead to reduced fuel consumption, lower emissions, and improved overall efficiency of the fleet. Additionally, the use of geographic coordinates can also enable the integration of other location-based data, such as traffic patterns and road conditions, into the route planning process, further improving the accuracy and effectiveness of the route plans.

In an embodiment, the route parameters 104 for each of the plurality of routes further includes at least two of: a predefined start time for the route, a predetermined end time for the route, or a predefined duration of the route. These time-related parameters may be indicative of time windows for pickup and delivery of goods. The inclusion of at least two of these parameters allows for the calculation of the third parameter, thereby providing a complete time window for the route. For example, if the predefined start time for a route is set at 8:00 AM and the predetermined end time is set at 12:00 PM, then the predefined duration of the route can be calculated as four hours. Conversely, if a route has a predefined start time of 9:00 AM and a predefined duration of three hours, the predetermined end time can be calculated as 12:00 PM.

The predefined start time for the route may be indicative of the earliest time at which the route can be started, and may take into account factors such as traffic, road conditions, and time-sensitive pickups or deliveries. The predetermined end time for the route may be indicative of the latest time at which the route must be completed and may take into account factors such as time-sensitive deliveries, customer expectations, and regulatory requirements. The predefined duration of the route may be indicative of the total time required to complete the route, taking into account factors such as traffic, road conditions, and the number of pickups and deliveries. The duration may be expressed in terms of hours, minutes, or other units of time, and may be used to calculate the end time of the route if the start time is known. Advantageously, the consideration of predefined temporal parameters for each route enables generation of more accurate and efficient dispatch plans.

In an embodiment, the route parameters 104 for one or more of the plurality of routes further comprises a preferential vehicle-type allocation parameter that corresponds to a preferential assignment of one of EVs or non-EVs. The route preference may be based on various factors, such as the type of cargo being transported, the route terrain, or the customer's specific requirements. For instance, a route that requires transportation of heavy cargo may prefer the assignment of a non-EV, while a route that requires transportation of lighter cargo may prefer the assignment of an EV. As another instance, a route that requires transportation of cargo through environmentally sensitive areas may prefer the assignment of EVs to minimise vehicular emissions.

In an embodiment, the route preferences for vehicle-type allocation may be explicitly defined by the customer or the fleet operator, and may be based on environmental considerations, cost, and regulatory requirements. For instance, routes that pass through areas with strict emission standards may prefer the assignment of EVs to minimise emissions and comply with regulatory requirements. Similarly, routes that require transportation of light cargo over short distances may prefer the assignment of EVs to minimise fuel costs and reduce the fleet's operating expenses. On the other hand, routes that require transportation of heavy cargo over long distances may prefer the assignment of non-EVs, such as diesel-powered trucks, due to their higher towing capacity and longer driving range. Additionally, routes that pass through areas with limited charging infrastructure may also prefer the assignment of non-EVs to minimise the risk of range anxiety and ensure timely delivery of cargo.

In an embodiment, in absence of an explicit route preference for vehicle-type allocation within the route parameters corresponding to any of the plurality of routes, the one or more processing units 108 are configured to default to prioritise assignment of EVs to the corresponding routes. This default prioritisation may be based on environmental considerations and/or regulatory requirements, whereby EVs are prioritised to minimise local emissions, while also minimising fuel costs and ensuring compliance with regulatory requirements.

The one or more processing units 108 are configured to determine a first schedule for dispatch of the one or more EVs 12A-N to first one or more of the plurality of routes by computing a solution for a predefined optimisation model having constraints as the vehicle parameters corresponding to the one or more EVs and the said route parameters 104. The one or more processing units 108 then identify remaining second one or more of the plurality of routes that are pending dispatch assignment. The one or more processing units 108 are further configured to determine a second schedule for dispatch of the one or more non-EVs 14A-N to the second one or more of the plurality of routes, based on comparison of the vehicle parameters 102 pertaining to the one or more non-EVs 14A-N with the route parameters 104 corresponding to the second one or more of the plurality of routes. The one or more processing units 108 are further configured to cause to display the first schedule and the second schedule using the electronic display device 112 which is communicably connected to the one or more processing units 110 through the network 106.

In the system 100, the memory 110 comprises one or more modules stored in the form of machine-readable instructions executable by the one or more processing units 108. The one or more modules are configured to perform a method for dispatch scheduling of the mixed fleet 10 including the one or more electric vehicles (EVs) 12A-N and one or more non-electric vehicles (non-EVs) 14A-N, as will be explained in further detail later.

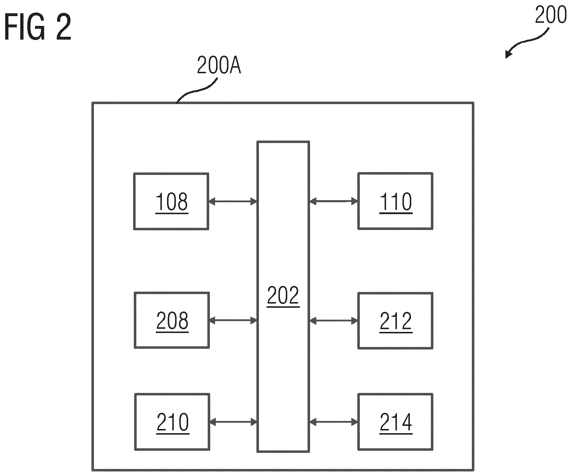

FIG 2 is a block diagram of an exemplary computational architecture 200 for dispatch scheduling of the mixed fleet 10, according to an exemplary embodiment of the present disclosure. It may be appreciated that the computational architecture 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

As illustrated, the computer 200A includes a communication mechanism such as a bus 202 for passing information among the components of the computational architecture 200. The computer 200A includes the one or more processing units 108 and the memory 110. Herein, the memory 110 is communicatively coupled to the one or more processing units 108. In an example, the memory 110 may be embodied as a computer readable medium on which program code sections of a computer program are saved, the program code sections being loadable into and/or executable in a system to make the computer 200A execute the steps for dispatch scheduling of the EVs 12A-N and the non-EVs 14A-N in the mixed fleet 10.

Generally, as used herein, the term "processing unit" refers to a computational element that is operable to respond to and processes instructions that drive the computer 200A. Optionally, the one or more processing units includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "one or more processing units" may refer to one or more individual processors, processing devices and various elements associated with a processing device that may be shared by other processing devices. Additionally, the one or more individual processors, processing devices and elements may be arranged in various architectures for responding to and processing the instructions that drive the system 100.

Herein, the memory 110 may be volatile memory and/or non-volatile memory. The one or more processing units 108 may execute instructions and/or code stored in the memory 110. A variety of computer-readable storage media may be stored in and accessed from the memory 110. The memory 110 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the one or more processing units 108 has connectivity to the bus 202 to execute instructions and process information stored in the memory 110. The one or more processing units 108 may include one or more processing cores with each core configured to perform independently. A multi-core processor enables multiprocessing within a single physical package. Examples of a multi-core processor include two, four, eight, or greater numbers of processing cores. Alternatively, or in addition, the one or more processing units 108 may include one or more microprocessors configured in tandem via the bus 202 to enable independent execution of instructions, pipelining, and multithreading. The one or more processing units 108 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The computer 200A may further include an interface 208, such as a communication interface (with the said terms being interchangeably used) which may enable the system 200 to communicate with other systems for receiving and transmitting information. The communication interface 208 may include a medium (e.g., a communication channel) through which the computer 200A communicates with other systems. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The computer 200A also includes a storage unit 210. The storage unit 210 may include a database that is an organized collection of structured data, designed to be easily accessed, managed, and updated. The database may be in form of a central repository of information that can be queried, analysed, and processed to support various applications and business processes. In the computer 200A, the database provides mechanisms for storing, retrieving, updating, and deleting data, and typically includes features such as data validation, security, backup and recovery, and data modelling. Data pertaining to the vehicle parameters 102 and the route parameters 104 can be stored in the database, and relevant parts of the data may be accessed by the memory 110 through the bus 202 and communicated to the one or more processing units 108 for executing the method of the present disclosure.

In certain embodiments, the storage unit 210 within the computer 200A may not necessarily be a database. Instead, it may encompass other forms of data storage solutions, which could include unstructured data.

The computer 200A further includes an input device 212 and an output device, which may be the electronic display device 112. The input device 212 may take various forms depending on the specific application of the system 200. In an example, the input device 212 may include one or more of a keyboard, a mouse, a touchscreen display, a microphone, a camera, or any other hardware component that enables a user (such as a fleet operator or manager) to interact with the computer 200A. In an embodiment, the route parameters 104 may be input by the user using the input device 212, and the route parameters 104 may then be received by the one or more processing units 108 as constraints for dispatch scheduling of the one or more EVs 12A-N and the one or more non-EVs 14A-N.

The electronic display device 112 may be configured to display a determined or computed display schedule of the one or more EVs 12A-N and the one or more non-EVs 14A-N to the user. It is to be understood that, when reference is made in the present invention to the term "display" this refers generically either to a display screen on its own or to the screen and an associated housing, drive circuitry and possibly a physical supporting structure, of which all, or part of is provided for displaying information. Examples of the electronic display device 112 include, but are not limited to, conventional display technologies such as CRT (Cathode Ray Tube), LED (Light Emitting Diode), and LCD (Liquid Crystal Display) screens. Additionally, the device may employ advanced display technologies found in augmented reality (AR), virtual reality (VR), and mixed reality (MR) systems, providing a versatile range of options for visualizing the dispatch schedules.

In the computer 200A, the one or more processing units 108 and accompanying components have connectivity to the memory 110 via the bus 202. The memory 110 may include both dynamic memory (e.g., RAM, magnetic disk, writable optical disk, etc.) and static memory (e.g., ROM, CD-ROM, etc.) for storing executable instructions that when executed perform the method steps which will be described herein later. The memory 110 may include a module arrangement to perform the method steps. In the exemplary computational architecture 200, the memory 110 may also be configured to store the data associated with or generated by the execution of the inventive steps.

Those of ordinary skill in the art will appreciate that the architecture depicted in FIG 2 may vary for particular implementations. For example, other peripheral devices such as an optical disk drive and the like, Local Area Network (LAN) / Wide Area Network (WAN) / Wireless (e.g. Wi-Fi) adapter, graphics adapter, disk controller, input/output (I/O) adapter etc. may also be used in addition to or in place of the hardware depicted. The depicted example is provided for the purpose of explanation only and is not meant to imply architectural limitations with respect to the present disclosure.

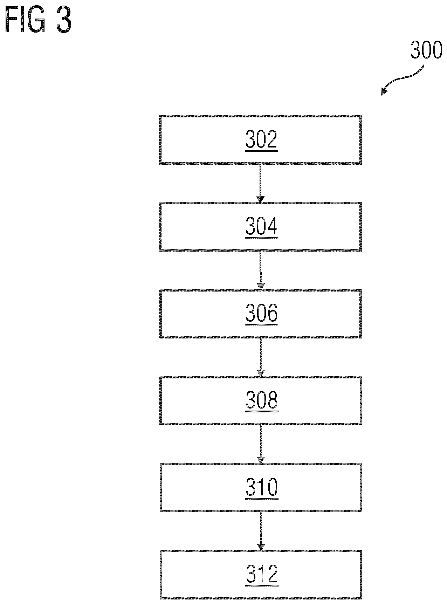

FIG 3 is a flow diagram illustrating a method 300 for dispatch scheduling of the mixed fleet 10 including the one or more EVs 12A-N and the one or more non-EVs 14A-N, according to an exemplary embodiment of the present disclosure.

At step 302, the method 300 involves receiving, by the one or more processing units 108, vehicle parameters 102 of each vehicle 12A-N, 14A-N in the mixed fleet 10. The vehicle parameters 102 relate at least to a range of travel and a vehicle loading capacity of the corresponding vehicle in the fleet 10.

At step 304, the method 300 involves receiving, by the one or more processing units 108, the route parameters 104 for each of a plurality of routes. The route parameters 104 include data pertaining to a route distance and a required vehicle loading capacity for the corresponding route.

At step 306, the method 300 involves determining, by the one or more processing units 108, a first schedule for dispatch of the one or more EVs 12A-N to first one or more of the plurality of routes by computing a solution for a predefined optimisation model having constraints as the vehicle parameters 102 corresponding to the one or more EVs 12A-N and the said route parameters 104.

In an embodiment, the predefined optimisation model for determining the first schedule implements one of a Mixed Integer Linear Programming (MILP) algorithm or a heuristic algorithm.

In an embodiment, the MILP algorithm may formulate the problem as a multi-objective optimization problem, with the primary objective being the improvement of EV utilization. In a further embodiment, the State of Charge (SoC) of the one or more EVs may be modelled using a decremental SoC model, in which the SoC can either remain constant or decrease during scheduling. The model may take into account the energy consumption of the one or more EVs 12A-N during transportation to ensure that the one or more EVs 12A-N have sufficient energy to complete their corresponding assigned routes. Across embodiments, the MILP algorithm may also consider other constraints, such as the capacity constraints of the EVs, the routeparameters, and the time windows for pickup and delivery. The MILP algorithm solves the optimisation problem by finding the optimal assignment of the one or more EVs 12A-N to routes that maximises the utilization of the EVs while satisfying all the constraints.

In an embodiment, the MILP algorithm may take into account route information, battery information, and a dummy factor to compute a solution that maximises the distance covered by the EVs 12A-N while satisfying battery constraints. Specifically, the algorithm may add dummy routes representative of predefined charging time periods for the EVs 12A-N, and may define a dummy factor having a first value for designated routes indicative of energy consumption and a second value for dummy routes indicative of energy replenishment. The algorithm may then compute a solution that satisfies constraints based on route information, battery information, and the dummy factor, and may also satisfy a battery constraint defined by the maximum capacity, safety margin, and input state-of-charge of the EV's battery. The solution may be computed with the objective of achieving a maximum distance covered by the EVs 12A-N for the designated routes, and the schedule may be determined for a time slot between the end time of a first designated route and the start time of a last designated route within a given day.

In another embodiment, a heuristic algorithm may be used as an alternative to the MILP algorithm. The heuristic algorithm is a more computationally efficient approach that uses rules of thumb or approximations to find a good solution to the optimisation problem. The heuristic algorithm may be used when the problem size is large or when computational resources are limited. In the embodiment, the method of determining the first schedule of the one or more EVs 12A-N to the first one or more of the plurality of routes may be executed by the one or more processing units 108.

According to an exemplary heuristics-based method of determining the first schedule of the one or more EVs 12A-N, fleet information, route information, and energy pricing information associated with the one or more EVs 12A-N in the fleet may be obtained. The fleet information may include initial states of charge (SoC) for each EV in the fleet, the route information may include a set of routes to be served in a defined operation period and distances to be covered in each route, and the energy pricing information may include average energy cost for charging. Information indicating a required state of charge (SoC) for each electric vehicle (EV) 12A-N to serve each route in the set of routes may be received. For each route in the set of routes, a pre-trip SoC may be determined for the one or more EVs 12A-N based on the initial SoC and a charging potential based on available charging time before the route, and a post-trip SoC may be determined based on the pre-trip SoC and energy consumption for the route. An EV may be selected for the route based on a predefined selection criterion related to at least one of the pre-trip SoC and the post-trip SoC, and the selected EV may be mapped to the route. A charging schedule for the EVs 12A-N in the fleet 10 may be determined based on a charging duration factor (CDF), which in turn may be determined based on the energy pricing information and may be inversely proportional to the average energy cost during a charging period. A dispatch plan including the route mappings and the charging schedule for the EVs 12A-N in the fleet 10 may be outputted.

For each route in the set of routes, the determination of the pre-trip SoC and the post-trip SoC, the selection of an EV, and the mapping of the selected EV to the route may be performed. The determination of the charging schedule for the EV fleet may be performed based on the CDF, which takes into account the energy pricing information. The output dispatch plan may provide a comprehensive plan for the dispatch of the EV fleet, including the route mappings and the charging schedule.

Advantageously, the predefined optimisation model determines an optimal first schedule for the dispatch of the one or more EVs 12A-N to the routes, while minimising their local environmental impact. This approach promotes sustainability by reducing local greenhouse gas emissions, air pollution, and other negative environmental effects associated with traditional fossil fuel-based transportation.

In an embodiment where the vehicle parameters 102 of each EV 12A-N in the mixed fleet 10 includes one or more periods of unavailability, the step 306 of determining the first schedule for the dispatch of the one or more EVs 12A-N includes excluding for each EV, by the predefined optimization model, one or more time slots that coincide with the one or more periods of unavailability of the corresponding EV. Advantageously, the predefined optimization model can generate a more realistic and efficient dispatch schedule that takes into account the actual availability of the one or more EVs 12A-N, thereby reducing the likelihood of dispatch errors and improving overall fleet utilization.

At step 308, the method 300 involves identifying remaining second one or more of the plurality of routes that are pending dispatch assignment. The identification of the remaining routes is a crucial step in the dispatch planning process, as it allows for a focus on the routes that still require assignment and facilitates the allocation of the available one or more non-EVs 14A-N to these routes.

At step 310, the method 300 includes determining, by the one or more processing units 108, a second schedule for dispatch of the one or more non-EVs 14A-N to the second one or more of the plurality of routes. This determination is done based on a comparison of the vehicle parameters 102 pertaining to the one or more non-EVs 14A-N with the route parameters 104 corresponding to the second one or more of the plurality of routes.

In an embodiment, the vehicle parameters of each non-EV 14A-N in the mixed fleet 10 may include one or more periods of unavailability of the corresponding non-EV. In the embodiment, the step 310 of determining the determining the second schedule for the dispatch of the one or more non-EVs 14A-N involves excluding, for each non-EV, one or more time slots that coincide with the one or more periods of unavailability of the corresponding non-EV. Advantageously, it is ensured that one or more route assignments for the one or more non-EVs 14A-N are made within respective accessible operational windows.

in an embodiment, the route parameters 104 for one or more of the plurality of routes further may include the preferential vehicle-type allocation parameter that corresponds to a preferential assignment of one of EVs or non-EVs. In the embodiment, the step 308 of determining the first schedule for the dispatch of the one or more EVs 12A-N and the step 310 of determining the second schedule for the dispatch of the one or more non-EVs 14A-N are executed in accordance with the route parameters 104, such that the preferential vehicle-type is prioritised for assignment to the respective routes.

Advantageously, by executing the steps of determining the first and second schedules in accordance with the route parameters 104, the preferred vehicle-type can be prioritized for assignment to the respective routes, thereby increasing the efficiency and effectiveness of the fleet operations, reducing the likelihood of vehicle misallocation, and improving overall customer satisfaction.

In an embodiment, the step 306 of determining the first schedule for the dispatch of the one or more EVs 12A-N and the step 310 of determining the second schedule for the dispatch of the one or more non-EVs 14A-N involves generating a feasibility matrix for evaluating a compatibility of each EV 12A-N with the first one or more of the plurality of routes and each non-EV 14A-N with the second one or more of the plurality of routes, based on the comparison of the vehicle parameters pertaining to the one or more EVs 12A-N and the one or more non-EVs 14A-N with the corresponding route parameters. The feasibility matrix may be a data structure that represents the compatibility of each EV with each of the first one or more of the plurality of routes, and the compatibility of each non-EV with each of the second one or more of the plurality of routes, based on the said comparison.

In one preferred embodiment, the feasibility matrix may be a binary matrix, where each element in the matrix can have a value of either "true" or "false", indicating whether a particular vehicle is compatible with a particular route or not. Following the generation of the feasibility matrix, each EV 12A-N in the mixed fleet 10 can be mapped to the corresponding compatible first one or more of the plurality of routes, and each non-EV 14A-N in the mixed fleet 10 can be mapped to the corresponding compatible second one or more of the plurality of routes, based on the feasibility matrix.

In an embodiment, the feasibility matrix may have a plurality of entries or elements, each associated with a combination of a vehicle and a route. For example, the feasibility matrix can be represented as a table, where the rows represent the vehicles 12A-N, 14A-N and the columns represent the routes. Each cell in the table contains a value (entry) indicating whether the corresponding vehicle is compatible with the corresponding route. The values in the feasibility matrix can be used to map each vehicle to the corresponding compatible routes, and to determine the first schedule for the dispatch of the one or more EVs 12A-N and the second schedule for the dispatch of the one or more non-EVs 14A-N. Each entry in the feasibility matrix may represent either a truth value indicating feasibility of the corresponding vehicle to serve the corresponding route, or a non-truth value indicating infeasibility of the corresponding vehicle to serve the corresponding route. For instance, the truth value can be represented by the numerical value "1" and the non-truth value can be represented by the numerical value "0".

Advantageously, the use of a feasibility matrix with binary values (e.g. 0 and 1) enables a clear and concise representation of the compatibility between the one or more EVs 12A-N and the one or more non-EVs 14A-N and routes, facilitating efficient mapping and scheduling of the vehicles 12A-N, 14A-N. This representation also allows for easy identification of feasible and infeasible combinations, reducing the complexity of the dispatch planning and enabling more accurate and effective allocation of the one or more EVs 12A-N and the one or more non-EVs 14A-N to routes. Furthermore, the use of the feasibility matrix enables the consideration of multiple factors and constraints in the dispatch planning, leading to more informed and optimized decision-making.

In an embodiment, when the one or more of the plurality of routes constitutes a plurality of routes (i.e., when the first one or more of the plurality of routes constitutes a first plurality of routes and the second one or more of the plurality of routes constitutes a second plurality of routes), the step 310 may further include determining, for each EV 12A-N and each non-EV 14A-N, whether there exists one or more overlaps between the time slots of the corresponding routes initially assigned thereto, including any predetermined buffer time between successive routes associated with the corresponding vehicle. When there exists one or more overlaps, the method 300 includes updating the feasibility matrix based on the determined overlap. Updating the feasibility matrix may include assigning a non-truth value (0) to each of one or more subsequent truth-mapped entries after the first feasible vehicle and route combination that is truth-mapped (1).

For example, consider a scenario where a non-EV may be initially assigned to two routes, Route A and Route B based on an initial feasibility matrix. Route A may start at 8:00 AM and may end at 10:00 AM, while Route B may start at 9:30 AM and may end at 11:30 AM. The predetermined buffer time between the two routes for the non-EV may be 30 minutes. In this case, the method may determine that there exists an overlap between the time slots of the two routes. Additionally, in the example, no buffer time of 30 minutes is accounted for after the end of Route A (i.e., the earlier starting route) to initiate route B.

When such an overlap is detected, the step 310 may include updating the feasibility matrix by assigning a non-truth value to each of one or more subsequent truth-mapped entries after the first feasible non-EV and second route combination that may be truth-mapped. In other words, the method may set the feasibility of the non-EV for the subsequent routes to "0" or "non-truth" or "false", indicating that the non-EV may not be available for those routes due to the overlap. For instance, if the feasibility matrix initially may show that the non-EV is feasible for both Route A and Route B (i.e., the entries for both routes may be set to "1" or "true"), the method involves updating the feasibility matrix by setting the entry for Route B to "0" or "non-truth" or "false", indicating that the non-EV may not be available for Route B due to the overlap with Route A. This ensures that the non-EV is not assigned to multiple routes with overlapping time slots which could result in scheduling conflicts.

For the exemplary scenario, below are the before and after scenarios depicted in tables to illustrate how the feasibility matrix is updated when an overlap is detected between two routes assigned to a non-EV 14A-N.

Initial feasibility matrix (before the update):

| **Vehicle** | **Route A** | **Route B** |
|---|---|---|
| Non-EV 1 | 1 (feasible) | 1 (feasible) |

Updated feasibility matrix (in view of the overlap):

| **Vehicle.** | **Route A** | **Route B** |
|---|---|---|
| Non-EV 1 | 1 (feasible) | 0 (infeasible) |

In an embodiment, the step 310 may further include determining refuelling schedules for the one or more non-EVs 14A-N by assigning a predetermined buffer time between successive trips for each non-EV for facilitating refuelling of the one or more non-EVs 14A-N, and assigning each of the one or more non-EVs 14A-N to the second one or more of the plurality of routes based on the corresponding refuelling schedules.

For example, consider a non-EV bus that has a range of 200 km on a single tank of fuel. The method may assign a buffer time of 15 minutes between successive trips to facilitate refuelling. If the non-EV bus needs to cover a total distance of 220 km, and Route A is 200 km and Route B is 20 km following Route A (along the same line), the buffer time of 15 minutes is accounted for. The method may involve assigning this non-EV bus to Route A and then to Route B, with a 15-minute refuelling break in between, to ensure that the non-EV bus has sufficient fuel to complete Route B.

Likewise, the step 306 may further include determining charging schedules for the one or more EVs 12A-N by assigning a predetermined buffer time between successive trips for each EV for facilitating recharging of the one or more EVs 12A-N, and assigning each of the one or more EVs 12A-N to the first one or more of the plurality of routes based on the corresponding charging schedules. This may be done to ensure that each EV 12A-N has sufficient charge to serve the corresponding route(s), within minimal to no need for charging in the middle of a trip.

In an embodiment, in the step 306, the first schedule for the dispatch of the one or more EVs 12AN may be determined based on a maximisation of vehicle range utilization of each EV 12A-N with respect to the first one or more of the plurality of routes. For example, the method 300 of the present disclosure may prioritize the assignment of EVs 12A-N to routes that efficiently utilize their available battery capacity, thereby minimizing the frequency of charging required and mitigating concerns associated with range limitations.

In an embodiment, in the step 310, the second schedule for the dispatch of the one or more non-EVs 14A-N may be determined based on a maximisation of vehicle range utilization of each non-EV 14A-N with respect to the second one or more of the plurality of routes. For example, the method 300 of the present disclosure may prioritize the assignment of non-EVs 14A-N to routes that are within their range of travel, to minimize the need for refuelling and reduce the risk of range anxiety. The determination of step 310 may also consider the fuel efficiency of each non-EV 14AN and the terrain and traffic conditions of each route, to optimize the vehicle range utilization of each non-EV 14A-N.

For example, consider two non-EV buses, each with a range of 250 km on a single tank of fuel. In the example, step 310 may involve analysing the route parameters and identifying three routes that need to be assigned: Route A, spanning 120 km, Route B, spanning 80 km, and Route C, spanning 50 km. In the example, all three routes share the same starting location, which may be a depot. To effectively utilize the vehicle range, Route A and Route B, with a combined distance of 200 km, could be optimally managed by the first non-EV bus, ensuring it operates within its 250 km range capacity. Concurrently, Route C, requiring less distance, would be suitably managed by the second non-EV bus. This arrangement allows for efficient use of both buses while minimising the frequency of refuelling.

At step 312, the computer-implemented method 300 of the present disclosure involves causing to display, by the one or more processing units 108, the first schedule and the second schedule using the electronic display device 112 communicably connected to the one or more processing units 108. This enables users, such as but not limited to fleet / depot managers or operators, to visually comprehend and effectively manage the dispatch of both the one or more EVs 12A-N and one or more non-EVs 14A-N within the mixed fleet 10. The display device 112 may be configured to provide fleet operators with an intuitive and real-time visual representation of the scheduling status. This interactivity can support rapid adjustments and optimizations based on current fleet dynamics and requirements.

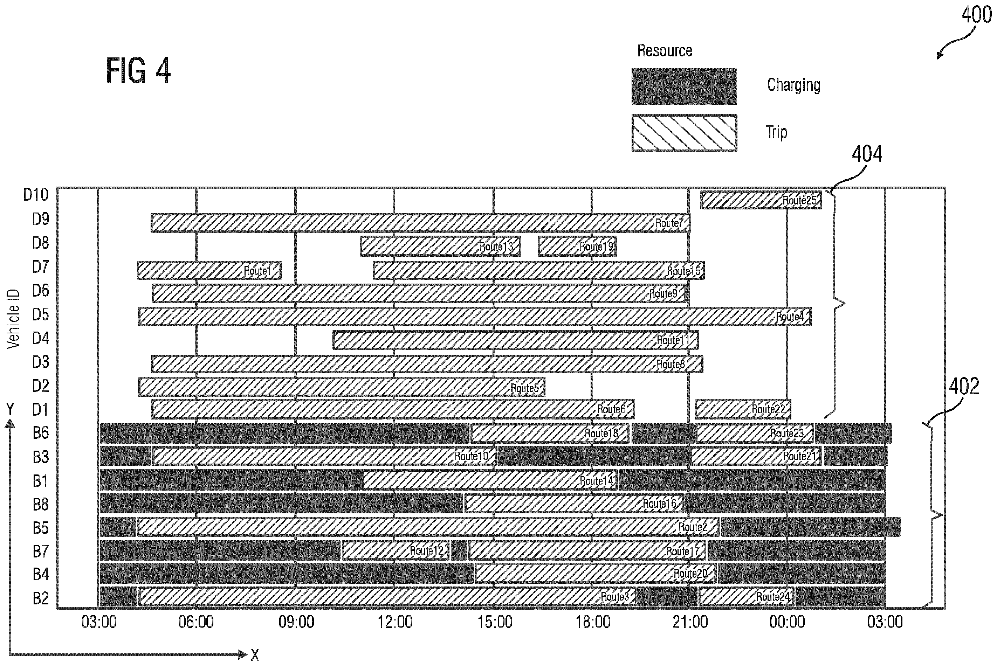

FIG 4 is a representation of an exemplary vehicle dispatch schedule 400 for an exemplary mixed fleet 10, illustrating vehicle to route mapping and corresponding dispatch schedules for eight EVs and ten non-EVs serving twenty-five routes, according to an exemplary embodiment of the present disclosure.

The graphical layout of FIG 4 is organized with the X-axis representing the time allotted for the scheduling period, thus allowing for an analysis of trip duration and time allocation across the fleet's operations. The Y-axis delineates the vehicle identification (ID), where the IDs B1 through B8 are assigned to the EVs, and the IDs D1 through D10 are assigned to the non-EVs, indicating their particular routes and related scheduling requirements.

In the illustrated figure, the designation 402 represents the schedule block for the EVs. This segment comprehensively accounts for charging times alongside trip / travel times. This consideration ensures that each EV is adequately charged in accordance with its operational requirements, preventing interruptions due to insufficient charge and optimising the vehicle's deployment across designated routes.

Further, the designation 404 refers to the schedule block for the non-EVs. This component incorporates buffer time between successive trips, which may be intended for specific purposes such as refueling. Such an allocation of buffer time is crucial to maintaining operational continuity and ensuring that non-EVs are appropriately refueled between assignments, hence minimising the risk of delays or disruptions due to fuel shortages.

Advantageously, the computer-implemented method and system of the present disclosure provide a unified solution for dispatch scheduling of a mixed fleet comprising both electric vehicles (EVs) and non-electric vehicles (non-EVs), thereby overcoming the limitations and challenges associated with using separate software tools for EV and non-EV dispatch planning.

One of the significant advantages of the method and system of the present disclosure is the elimination of the need for disparate and multiple software applications for EV and non-EV dispatch planning, which can lead to increased energy consumption, heightened energy costs, and a larger carbon footprint. By providing a single, integrated solution for dispatch scheduling of both EVs and non-EVs, the method of the present disclosure reduces the computational infrastructure required to support multiple software tools, resulting in lower energy consumption and costs.

Furthermore, the method and system of the present disclosure overcome the complexity of integrating data from multiple sources, which can result in data inconsistencies and errors, compromising the accuracy of dispatch plans. By using a single, unified solution, the computer-implemented method and system of the present disclosure ensures that all data is integrated seamlessly, reducing the risk of data entry errors, formatting inconsistencies, and mismatches in data fields.

In addition, the method and system of the present disclosure reduce the operational and maintenance challenges associated with using separate software tools for EV and non-EV dispatch scheduling. The system of the present disclosure eliminates the need for specialized personnel to manage and operate disparate and multiple software systems for EV and non-EV dispatch scheduling, thereby reducing maintenance and support costs. The method and system of the present disclosure also provide significant economic benefits by reducing the costs associated with purchasing and maintaining multiple software solutions. This is particularly beneficial for small and medium-sized fleet operators who may find it prohibitively expensive to invest in separate software tools for EV and non-EV dispatch planning.

Moreover, the computer-implemented method and system of the present disclosure prioritizes the assignment of electric vehicles with zero tailpipe emissions, to routes where they can operate most efficiently and effectively. By prioritising and optimising the assignment of electric vehicles to routes based on their unique characteristics and requirements, such as range limitations and charging times, the method minimises the carbon footprint of the fleet and reduces local emissions on the road.

Furthermore, the focus of the method and system of the present disclosure on assigning electric vehicles to routes where they can operate most efficiently and effectively also leads to more effective management of range anxiety, as electric vehicles are assigned to routes that are within their range capabilities, minimizing the risk of range anxiety and ensuring that electric vehicles can complete their assigned routes in a timely manner. Once the electric vehicles have been assigned to routes, the method then optimises the assignment of non-electric vehicles to the remaining routes. This approach ensures that non-electric vehicles are assigned to routes where they can operate most efficiently and effectively, reducing the overall emissions of the fleet and minimising the strain on energy infrastructure.

The method and system of the present disclosure advantageously enable depot operators to manage dispatch operations for both electric vehicles (EVs) and non-electric vehicles (non-EVs) using a single software tool, simplifying operational management across a mixed fleet. This integrated approach facilitates the efficient mapping of all routes, ensuring coverage by either an EV or non-EV without the complexities of utilizing multiple systems. Moreover, in the event of a vehicle breakdown, the system allows for easy replanning and reassignment within the same platform, enabling seamless replacement of an EV with a non-EV, or vice versa, thus maintaining operational continuity and minimising disruptions.

In addition, the optimization approach of the method of the present disclosure enables computational efficiency by pruning the solution space, resulting in reduced computational overhead and improved scalability. The method also provides a technical advantage by reducing the complexity of the optimization problem, as it breaks down the optimization problem into smaller sub-problems by first optimizing the assignment of electric vehicles to routes, and then optimizing the assignment of non-electric vehicles to the remaining routes. This decomposition approach facilitates a more targeted and efficient solution process, reducing the computational complexity and allowing for effective management of computational resources.

The present disclosure may take the form of a computer program product comprising program modules accessible from computer-usable or computer-readable medium storing program code for use by or in connection with one or more computers, one or more processing units, or instruction execution systems. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation medium. The one or more processing units and program codes for implementing each aspect of the present disclosure may be centralized or distributed (or a combination thereof).

The present disclosure may take the form of a computer-readable storage medium comprising instructions which, when executed by the processing unit, cause the processing unit to perform the method steps described hereinabove. The computer-readable storage medium may include, but not be limited to, a portable computer diskette, a hard disk, a random-access memory (RAM) device, a read-only memory (ROM) device, an erasable programmable read-only memory (EPROM or Flash memory) device, a portable compact disc read-only memory (CDROM), an optical storage device, and a magnetic storage device.

Those skilled in the art will recognize that, unless specifically indicated or required by the sequence of operations, certain steps in the processes described above may be omitted, performed concurrently or sequentially, or performed in a different order.

While the present disclosure has been described in detail with reference to certain embodiments, it should be appreciated that the present disclosure is not limited to those embodiments. The foregoing examples have been provided merely for the purpose of explanation and are in no way to be construed as limiting of the present disclosure disclosed herein. While the system and the method of the present disclosure have been described with reference to various embodiments, it is understood that the words used herein are words of description and illustration, rather than words of limitation. Furthermore, although the disclosure has been described with reference to particular means, materials, and embodiments, it is not intended to be limited to the specifics disclosed herein; rather, it extends to all functionally equivalent structures, methods, and uses within the scope of the appended claims. Those skilled in the art, having the benefit of the teachings of this specification, may effect numerous modifications and changes without departing from the scope of the disclosure in its aspects.

### List of References

- 10: Mixed fleet
- 12A-N: One or more electric vehicles (EVs)
- 14A-N: One or more non-electric vehicles (non-EVs)
- 100: System
- 102: Vehicle parameters
- 104: Route parameters
- 106: Network
- 108: One or more processing units
- 110: Memory
- 112: Electronic display device
- 200: Exemplary computational architecture
- 200A: Computer
- 202: Bus
- 208: Communication interface
- 210: Storage unit
- 212: Input device
- 300: Method
- 302, 304, 306: Method steps
- 308, 310, 312: Method steps
- 400: Exemplary vehicle dispatch schedule
- 402: Electric vehicles schedule block
- 404: Non-electric vehicles schedule block
- B1-B8: IDs of electric vehicles
- D1-D10: IDs of non-electric vehicles

## Claims

1. A computer-implemented method (300) for dispatch scheduling of a mixed fleet (10) comprising one or more electric vehicles (EVs) (12A-N) and one or more non-electric vehicles (14A-N) (non-EVs), the computer-implemented method (300) comprising:
receiving (302), by one or more processing units (108), vehicle parameters (102) of each vehicle (12A-N, 14A-N) in the mixed fleet (10), the vehicle parameters (102) relating at least to a range of travel and at least one of a vehicle loading capacity or one or more vehicle dimensions;
receiving (304), by the one or more processing units (108), route parameters (104) for each of a plurality of routes, comprising data pertaining to a route distance and at least one of a required vehicle loading capacity or required one or more vehicle dimensions for the corresponding route;
determining (306), by the one or more processing units (108), a first schedule for dispatch of the one or more EVs (12A-N) to first one or more of the plurality of routes by computing a solution for a predefined optimisation model having constraints as the vehicle parameters (102) corresponding to the one or more EVs (12A-N) and the said route parameters (104), and identifying (308) remaining second one or more of the plurality of routes;
determining (310), by the one or more processing units (108), a second schedule for dispatch of the one or more non-EVs (14A-N) to the second one or more of the plurality of routes, based on comparison of the vehicle parameters (102) pertaining to the one or more non-EVs (14A-N) with the route parameters (104) corresponding to the second one or more of the plurality of routes; and
causing to display (312), by the one or more processing units (108), the first schedule and the second schedule using an electronic display device (112) communicably connected to the one or more processing units (108).

2. The computer-implemented method (300) according to claim 1, wherein the vehicle parameters (102) of each EV (12A-N) in the mixed fleet (10) further comprises one or more periods of unavailability of the corresponding EV.

3. The computer-implemented method (300) according to claim 2, wherein determining the first schedule for the dispatch of the one or more EVs (12A-N) comprises excluding for each EV, by the predefined optimization model, one or more time slots that coincide with the one or more periods of unavailability of the corresponding EV.

4. The computer-implemented method (300) according to any one of the preceding claims, wherein the vehicle parameters (102) of each EV (12A-N) further comprises at least one of: maximum allowable charging power rate of the EV, a State of Charge (SoC) of the EV, or a balancing duration associated with cells in the EV.

5. The computer-implemented method (300) according to any one of the preceding claims, wherein the vehicle parameters (102) of each non-EV (14A-N) in the mixed fleet (10) further comprises one or more periods of unavailability of the corresponding non-EV.

6. The computer-implemented method (300) according to claim 5, wherein determining the second schedule for the dispatch of the one or more non-EVs (14A-N) comprises excluding, for each non-EV, one or more time slots that coincide with the one or more periods of unavailability of the corresponding non-EV.

7. The computer-implemented method (300) according to any one of the preceding claims, wherein the route parameters (104) for each of the plurality of routes further comprises at least two of: a predefined start time for the route, a predetermined end time for the route, or a predefined duration for covering the route.

8. The computer-implemented method (300) according to any one of the preceding claims, wherein the route parameters (104) for one or more of the plurality of routes further comprises a preferential vehicle-type allocation parameter that corresponds to a preferential assignment of one of the EVs (12A-N) or the non-EVs (14A-N), and
wherein the step of determining the first schedule for the dispatch of the one or more EVs (12A-N) and the step of determining the second schedule for the dispatch of the one or more non-EVs (14A-N) are executed in accordance with the preferential vehicle-type allocation parameter, such that the preferential vehicle-type is prioritised for assignment to the respective routes.

9. The computer-implemented method (300) according to any one of the preceding claims, wherein determining the first schedule for the dispatch of the one or more EVs (12A-N) and the second schedule for the dispatch of the one or more non-EVs (14A-N) comprises:
generating a feasibility matrix for evaluating a compatibility of each EV (12A-N) with the first one or more of the plurality of routes and a compatibility each non-EV (14A-N) with the second one or more of the plurality of routes, based on the comparison of the vehicle parameters (102) pertaining to the one or more EVs (12A-N) and the one or more non-EVs (14A-N) with the corresponding route parameters (104); and
mapping each EV (12A-N) to the corresponding compatible first one or more of the plurality routes and each non-EV (14A-N) to the corresponding compatible second one or more of the plurality routes based on the feasibility matrix.

10. The computer-implemented method (300) according to claim 9, wherein the feasibility matrix is generated based on combinations of the one or more EVs (12A-N) and the first one or more of the plurality of routes, and combinations of the one or more non-EVs (14A-N) and the second one or more of the plurality of routes.

11. The computer-implemented method (300) according to claim 9 or claim 10, wherein when the one or more of the plurality of routes constitutes a plurality of routes, the computer-implemented method (300) further comprises:
determining, by the one or more processing units (108), for each EV (12A-N) and each non-EV (14A-N), whether there exists one or more overlaps between the time slots of the corresponding routes initially assigned thereto, including any predetermined buffer time between successive routes associated with the corresponding vehicle; and
when there exists one or more overlaps, updating the feasibility matrix based on the determined overlap.

12. The computer-implemented method (300) according to any one of the preceding claims, wherein determining the second schedule for the dispatch of the one or more non-EVs (14AN) further comprises:
determining refuelling schedules for the one or more non-EVs (14A-N) by assigning a predetermined buffer time between successive trips for each non-EV (14A-N) for facilitating refuelling of the one or more non-EVs (14A-N); and
assigning each of the one or more non-EVs (14A-N) to the second one or more of the plurality of routes based on the corresponding refuelling schedules.

13. The computer-implemented method (300) according to any one of the preceding claims, wherein the second schedule for the dispatch of the one or more non-EVs (14A-N) is determined based on a maximization of vehicle range utilization of each non-EV (14A-N) with respect to the second one or more of the plurality of routes.

14. A system (100) for dispatch scheduling of a mixed fleet (10) comprising one or more electric vehicles (EVs) (12A-N) and one or more non-electric vehicles (non-EVs) (14A-N), the system (100) comprising:
one or more processing units (108);
an electronic display device (112) communicably connected to the one or more processing units (108); and
a memory (110) communicatively coupled to the one or more processing units (108), the memory (110) comprising one or more modules stored in the form of machine-readable instructions executable by the one or more processing units (108), wherein the one or more modules are configured to perform a method (300) according to any one of claims 1 to 13.

15. A computer-program product having computer-readable instructions stored therein, that when executed by one or more processing units (108), causes the one or more processing units (108) to perform a method (300) according to any one of claims 1 to 13.
